(19) **Europäisches Patentamt / European Patent Office / Office européen des brevets**

(11) **EP 3 365 109 B1**

(12) **FASCICULE DE BREVET EUROPEEN**

(45) Date de publication et mention
de la délivrance du brevet:
**28.08.2019 Bulletin 2019/35**

(21) Numéro de dépôt: **16785153.4**

(22) Date de dépôt: **21.10.2016**

(51) Int Cl.:
***B02C 17/20*** *(2006.01)*

(86) Numéro de dépôt international:
**PCT/EP2016/075401**

(87) Numéro de publication internationale:
**WO 2017/068137 (27.04.2017 Gazette 2017/17)**

(54) **BILLE EN UN PRODUIT FONDU**

WULST AUS EINEM VERSCHMOLZENEN PRODUKT

BEAD MADE OF A FUSED PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2015 FR 1560020**

(43) Date de publication de la demande:
**29.08.2018 Bulletin 2018/35**

(73) Titulaire: **Saint-Gobain Centre de Recherches et d'Etudes**
**Européen**
**92400 Courbevoie (FR)**

(72) Inventeurs:
• **NONNET, Emmanuel**
**84550 Saint-saturnin Les Avignon (FR)**
• **BOUSSANT-ROUX, Yves**
**84140 Montfavet (FR)**

(74) Mandataire: **Nony**
**11 rue Saint-Georges**
**75009 Paris (FR)**

(56) Documents cités:
EP-A1- 0 052 537    WO-A1-01/07375
WO-A1-2006/108945    FR-A1- 2 024 526
FR-A1- 2 925 485    US-A- 5 061 665

EP 3 365 109 B1

**Description**

**Domaine technique**

La présente invention se rapporte à de nouvelles billes en un produit fondu, à une poudre constituée pour plus de 90% de sa masse desdites billes et à l'utilisation de cette poudre en particulier dans les appareils et procédés de microbroyage, de microdispersion en milieu humide et de traitement de surfaces, en particulier par impacts.

**Etat de la technique**

Les appareils et procédés de microbroyage, de microdispersion en milieu humide et de traitement de surfaces sont bien connus, et sont notamment développés dans des industries telles que :

- l'industrie minérale, qui met en oeuvre des particules pour le broyage fin de matières prébroyées à sec par des procédés traditionnels, notamment pour le broyage de carbonate de calcium, d'oxyde de titane, de gypse, de kaolin, de minerai de fer, des minerais de métaux précieux et, de manière générale, de tous les minerais subissant un traitement chimique ou physico chimique ;
- les industries des peintures, encres, colorants, laques magnétiques, composés agrochimiques, qui utilisent des particules pour la dispersion et l'homogénéisation des divers constituants liquides et solides ;
- l'industrie du traitement de surfaces, qui a recours à des particules notamment pour des opérations de nettoyage de moules métalliques (pour la fabrication de bouteilles par exemple), l'ébavurage de pièces, le décalaminage, la préparation d'un support en vue d'un revêtement, la finition de surface (par exemple le satinage de l'acier), le grenaillage de pré-contraintes (appelé « shot peening » en langue anglaise), ou encore le conformage de pièces (appelé « peen forming » en langue anglaise).

Les particules classiquement utilisées pour ces marchés sont généralement sensiblement de forme sphérique et de taille comprise entre 0,005 à 10 mm. En fonction des marchés visés, elles peuvent présenter une ou plusieurs des propriétés suivantes :

- une inertie chimique et colorante vis-à-vis des produits traités,
- une résistance mécanique aux chocs,
- une résistance à l'usure,
- une faible abrasivité pour le matériel, notamment les organes agitateurs et les cuves, ou les organes de projection, et
- une faible porosité ouverte pour un nettoyage aisé.

Dans le domaine du broyage, on trouve différents types de particules, notamment du sable à grains arrondis, des billes de verre, en particulier des billes de verre vitrocéramisé, ou encore des billes métalliques.

Le sable à grains arrondis, comme le sable d'OTTAWA par exemple, est un produit naturel et bon marché, mais inadapté aux broyeurs modernes, pressurisés et à forts débits. En effet, le sable est peu résistant, de faible densité, variable en qualité et abrasif pour le matériel.

Les billes de verre, couramment utilisées, présentent une meilleure résistance, une plus faible abrasivité et une disponibilité dans une gamme plus large de tailles.

Les billes métalliques, notamment en acier, sont également connues depuis longtemps pour les applications précitées, mais leur utilisation reste marginale du fait qu'elles présentent souvent une inertie chimique insuffisante vis-à-vis des produits traités, entraînant notamment une pollution des charges minérales et un grisaillement des peintures, et une densité trop élevée nécessitant des broyeurs spéciaux impliquant notamment une forte consommation d'énergie, un échauffement important et une sollicitation mécanique élevée du matériel.

On connaît également des billes en matière céramique, qui ont pour avantage de présenter une meilleure résistance mécanique que les billes de verre, une densité élevée et une excellente inertie chimique. Parmi ces billes, on peut distinguer :

- les billes en un produit fritté, obtenues par un façonnage à froid d'une poudre céramique suivie d'une consolidation par cuisson à haute température, et
- les billes en un produit fondu, généralement obtenues par fusion d'une charge de matières premières, conversion de la matière en fusion en billes, et solidification de celles-ci.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue.

A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas a priori utilisable telle quelle pour fabriquer un produit fondu, et réciproquement.

La grande majorité des billes en un produit fondu utilisées dans les applications susmentionnées ont une composition du type zircone-silice ($ZrO_2$ - $SiO_2$) où la zircone est cristallisée sous forme monoclinique et/ou partiellement stabilisée (par des ajouts adaptés), et où la silice, ainsi qu'une partie des additifs éventuels, forment une matrice liant les cristaux de zircone.

Ces billes en un produit fondu offrent des propriétés optimales pour le broyage, à savoir une bonne résistance mécanique, une densité élevée, une inertie chimique élevée et une abrasivité faible vis-à-vis du matériel de broyage.

Des billes en un produit fondu à base de zircone et leur utilisation pour le broyage et la dispersion sont par exemple décrites dans FR 2 320 276 et EP 0 662 461. Ces documents décrivent ainsi l'influence de $SiO_2$, $Al_2O_3$, MgO, CaO, $Y_2O_3$, $CeO_2$, et $Na_2O$ sur les principales propriétés des billes résultantes, notamment sur les propriétés de résistance à l'écrasement et de résistance à l'abrasion.

Bien que les billes en un produit fondu de l'art antérieur soient de bonne qualité, l'industrie a toujours besoin de produits de qualité encore supérieure. En effet, les conditions de broyage sont toujours plus exigeantes.

En particulier, il existe un besoin pour de nouvelles billes en un produit fondu présentant une bonne résistance à l'usure.

Un but de l'invention est de répondre, au moins partiellement, à ce besoin.

## Résumé de l'invention

L'invention concerne une bille en un produit fondu présentant la composition chimique suivante, en pourcentages en masse sur la base des oxydes et pour un total de 100 % :

$20\% \leq (ZrO_2 + HfO_2)$, avec $HfO_2 \leq 2\%$,
$5\% \leq SiO_2$, de préférence $10\% \leq SiO_2$,
$0\% \leq Al_2O_3 \leq 20\%$,
$8,5\% \leq MgO \leq 20\%$,
$0,5\% \leq TiO_2 \leq 20\%$, et
oxydes autres que $ZrO_2$, $HfO_2$, $SiO_2$, $Al_2O_3$, MgO et $TiO_2$, ou « autres oxydes » : $\leq 5\%$
pourvu que le rapport massique $(ZrO_2 + HfO_2)/SiO_2$ soit supérieur à 1, et pourvu que $Al_2O_3 + TiO_2 \leq 26\%$ si MgO $> 17\%$.

Comme on le verra plus en détail dans la suite de la description, les inventeurs ont découvert, de façon inattendue, que cette combinaison de caractéristiques améliore les propriétés de résistance à l'usure.

Dans un mode de réalisation particulier, l'invention concerne une bille en un produit fondu présentant la composition chimique suivante, en pourcentages en masse sur la base des oxydes et pour un total de 100 % :

$20\% \leq (ZrO_2 + HfO_2)$, avec $HfO_2 \leq 2\%$,
$5\% \leq SiO_2$,
$0\% \leq Al_2O_3$,
$8,5\% \leq MgO$
$0,5\% \leq TiO_2$, et
oxydes autres que $ZrO_2$, $HfO_2$, $SiO_2$, $Al_2O_3$, MgO et $TiO_2$, ou « autres oxydes » : $\leq 5\%$ pourvu que $ZrO_2 + HfO_2 + SiO_2 \geq 80\%$ et que le rapport massique $(ZrO_2 + HfO_2)/SiO_2$ soit supérieur à 1.

Une bille selon l'invention peut encore présenter une ou plusieurs des caractéristiques optionnelles suivantes, suivant toutes les combinaisons possibles :

- La teneur en $ZrO_2$, en pourcentage en masse sur la base des oxydes, est supérieure ou égale à 30%, de préférence supérieure ou égale à 35%, de préférence supérieure ou égale à 38% et/ou inférieure ou égale à 60%, de préférence inférieure ou égale à 55%, de préférence inférieure ou égale à 50%, de préférence inférieure ou égale à 45%.
- La teneur en $SiO_2$, en pourcentage en masse sur la base des oxydes, est supérieure ou égale à 8%, de préférence supérieure ou égale à 10%, de préférence supérieure ou égale à 13%, de préférence supérieure ou égale à 15%, de préférence supérieure ou égale à 17% et/ou inférieure ou égale à 30%, de préférence inférieure ou égale à 27%, de préférence inférieure ou égale à 24%, de préférence inférieure ou égale à 22%.

- Le rapport en masse ($ZrO_2$ + $HfO_2$)/$SiO_2$ est supérieur ou égal à 1,3, de préférence supérieur ou égal à 1,5, de préférence supérieur ou égal à 1,7 et/ou inférieur ou égal à 5, de préférence inférieur ou égal à 4, de préférence inférieur ou égal à 3, de préférence inférieur ou égal à 2,5.
- Dans un mode de réalisation préféré, la teneur en $Al_2O_3$, en pourcentage en masse sur la base des oxydes, est supérieure ou égale à 0,5%, de préférence supérieure ou égale à 1%, de préférence supérieure ou égale à 2%, de préférence supérieure ou égale à 4%, de préférence supérieure ou égale à 6%, de préférence supérieure ou égale à 8%, de préférence supérieure ou égale à 10% et/ou inférieure ou égale à 18%, de préférence inférieure ou égale à 16%.
- La teneur en MgO, en pourcentage en masse sur la base des oxydes, est supérieure ou égale à 9%, de préférence supérieure ou égale à 9,5%, de préférence supérieure ou égale à 11%, voire supérieure ou égale à 13% ou à 15%, et/ou inférieure ou égale à 18%, de préférence inférieure ou égale à 17%, de préférence inférieure ou égale à 16%. Avantageusement, la porosité des billes en est réduite.
- La teneur en $TiO_2$, en pourcentage en masse sur la base des oxydes, est supérieure ou égale à 1%, de préférence supérieure ou égale à 2%, de préférence supérieure ou égale à 3%, de préférence supérieure ou égale à 4%, voire supérieure ou égale à 5% et/ou inférieure ou égale à 18%, de préférence inférieure ou égale à 16%, de préférence inférieure ou égale à 14%, de préférence inférieure ou égale à 13%, de préférence inférieure ou égale à 12%, de préférence inférieure ou égale à 10%, voire inférieure ou égale à 9%.
- La teneur totale en $ZrO_2$ + $HfO_2$ + $SiO_2$ est supérieure à 40%, de préférence supérieure à 45%, de préférence supérieure à 50%, de préférence supérieure à 55%, de préférence supérieure à 60% , de préférence supérieure à 70% , de préférence supérieure à 80% et/ou inférieure ou égale à 88%, de préférence inférieure ou égale à 85%.
- Le rapport en masse $Al_2O_3$/$SiO_2$ est supérieur ou égal à 0,1, de préférence supérieur ou égal à 0,2, de préférence supérieur ou égal à 0,5 et/ou inférieur ou égal à 2, de préférence inférieur ou égal à 1,5, voir inférieur ou égal à 1,0.
- Le rapport en masse MgO/$SiO_2$ est supérieur à 0,1, de préférence supérieur à 0,2, de préférence supérieur à 0,3 et/ou inférieur à 1, de préférence inférieur à 0,95, de préférence inférieur à 0,9.
- La teneur en « autres oxydes », c'est-à-dire les oxydes autres que les oxydes susmentionnés, est inférieure ou égale à 4 %, de préférence inférieure ou égale à 3 %, de préférence inférieure ou égale à 2% de la masse totale en oxydes.
- Les « autres oxydes » ne sont présents que sous forme d'impuretés.
- La teneur en oxydes représente plus de 95%, de préférence plus de 97%, de préférence plus de 99%, de préférence plus de 99,5%, voire plus de 99,9%, et même sensiblement 100 % de la masse totale de la bille.
- La porosité totale de la bille est inférieure à 4,5 %, voire inférieure à 4 %, voire inférieure à 3 %, voire inférieure à 2 %.
- La bille présente une taille inférieure à 10 mm, voire inférieure à 8 mm, voire inférieure à 6 mm, voire inférieure à 4 mm, voire inférieure à 2 mm et/ou supérieure à 0,005 mm, voire supérieure à 0,01 mm, voire supérieure à 0,1 mm, voire supérieure à 0,2 mm.
- La bille présente une sphéricité supérieure à 0,7, de préférence supérieure à 0,8, de préférence supérieure à 0,85, voire supérieure à 0,9.

L'invention concerne également une poudre constituée pour plus de 90% de sa masse, de préférence pour plus de 95%, de préférence pour plus de 99% de billes selon l'invention.

L'invention concerne enfin l'utilisation d'une poudre de billes selon l'invention, en tant qu'agent de broyage ; agent de dispersion en milieu humide ; agent de soutènement, en anglais « propping agent », notamment pour empêcher la fermeture des fractures géologiques profondes créées dans les parois d'un puits d'extraction, en particulier de pétrole ; agent d'échange thermique, par exemple pour lit fluidisé ; ou pour le traitement de surfaces, en particulier par impacts.

**Brève description des figures**

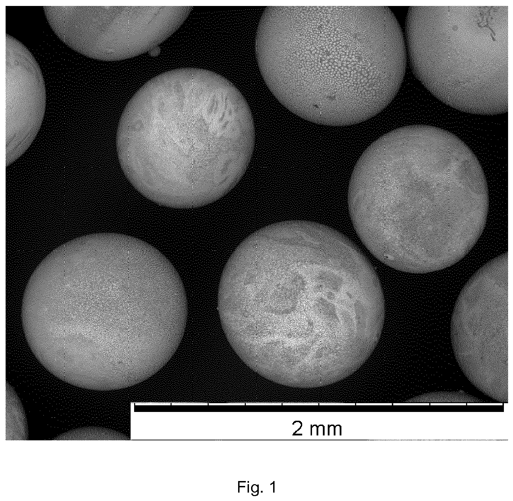

D'autres caractéristiques et avantages de l'invention apparaîtront encore à la lecture de la description détaillée qui va suivre et à l'examen du dessin annexé dans lequel la figure 1 représente un cliché des billes selon l'invention.

**Définitions**

- Par « particule », on entend un produit solide individualisé dans une poudre.
- Par « bille », on entend une particule présentant une sphéricité, c'est-à-dire un rapport entre son plus petit et son plus grand diamètre, supérieure ou égale à 0,6, quelle que soit la façon par laquelle cette sphéricité a été obtenue.
- On appelle « taille médiane » d'une poudre de particules, généralement notée $D_{50}$, la taille divisant les particules de cette poudre en première et deuxième populations égales en masse, ces première et deuxième populations ne comportant que des particules présentant une taille supérieure, ou inférieure respectivement, à la taille médiane. La taille médiane peut par exemple être évaluée à l'aide d'un granulomètre laser.

- Par « produit fondu », on entend un produit obtenu par solidification par refroidissement d'une matière en fusion.
- Une « matière en fusion » est une masse qui, pour conserver sa forme, doit être contenue dans un récipient. Une matière en fusion est généralement liquide. Cependant, elle peut contenir des particules solides, mais en quantité insuffisante pour qu'elles puissent structurer ladite masse.
- Par « précurseur » d'un oxyde, on entend un constituant apte à fournir ledit oxyde lors de la fabrication d'une bille selon l'invention. A titre d'exemple, le carbonate de magnésium $MgCO_3$ est un précurseur de MgO.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer,vanadium et chrome sont des impuretés. A titre d'exemples, on peut citer CaO, $Fe_2O_3$, $Y_2O_3$ ou $Na_2O$. Le carbone résiduel fait partie des impuretés de la composition des produits selon l'invention.
- Lorsqu'il est fait référence à la zircone ou à $ZrO_2$, il y a lieu de comprendre ($ZrO_2$+$HfO_2$). En effet, un peu de $HfO_2$, chimiquement indissociable du $ZrO_2$ dans un procédé de fusion et présentant des propriétés semblables, est toujours naturellement présent dans les sources de zircone à des teneurs généralement inférieures ou égales à 2 %. L'oxyde d'hafnium n'est alors pas considéré comme une impureté.

Tous les pourcentages de la présente description sont des pourcentages en masse sur la base des oxydes, sauf mention contraire.

D'autres caractéristiques et avantages apparaîtront encore à la lecture de la description qui va suivre.

## Description détaillée

### Procédé

Pour fabriquer un produit selon un mode de réalisation de l'invention, on peut procéder suivant le procédé comprenant les étapes successives suivantes :

   a) mélange de matières premières pour former une charge de départ ;
   b) fusion de la charge de départ jusqu'à obtention d'une matière en fusion,
   c) dispersion de ladite matière en fusion sous forme de gouttelettes liquides et solidification de ces gouttelettes liquides sous forme de billes solides,

les matières premières étant choisies à l'étape a) de manière que les billes obtenues à l'étape c) soient conformes à l'invention.

Ces étapes sont classiques, sauf en ce qui concerne la composition de la charge de départ, et l'homme du métier sait les adapter en fonction de l'application visée.

On décrit à présent un mode de réalisation préféré de ce procédé.

A l'étape a), la charge de départ est formée des oxydes indiqués ou de précurseurs de ceux-ci. De préférence, on utilise du sable de zircon naturel $ZrSiO_4$ titrant environ 66% de $ZrO_2$ et 33% de $SiO_2$, plus des impuretés. L'apport de $ZrO_2$ par l'intermédiaire du zircon est en effet beaucoup plus économique qu'une addition de $ZrO_2$.

L'ajustement des compositions peut se faire par addition d'oxydes purs, de mélanges d'oxydes ou de mélanges de précurseurs de ces oxydes, notamment par addition de $ZrO_2$, $SiO_2$, MgO, $TiO_2$ et $Al_2O_3$.

Selon l'invention, l'homme du métier ajuste la composition de la charge de départ de manière à obtenir, à l'issue de l'étape c), des billes conformes à l'invention. L'analyse chimique des billes selon l'invention est généralement sensiblement identique à celle de la charge de départ. En outre, le cas échéant, par exemple pour tenir compte de la présence d'oxydes volatils, ou pour tenir compte de la perte en $SiO_2$ lorsque la fusion est opérée dans des conditions réductrices, l'homme du métier sait comment adapter la composition de la charge de départ en conséquence.

De préférence, aucune matière première autre que $ZrO_2$+$HfO_2$, $SiO_2$, MgO, $Al_2O_3$, $TiO_2$ et leurs précurseurs n'est introduite volontairement dans la charge de départ, les autres oxydes présents étant des impuretés.

A l'étape b), la charge de départ est fondue, de préférence dans un four à arc électrique. L'électrofusion permet en effet la fabrication de grandes quantités de billes avec des rendements intéressants. Mais tous les fours connus sont envisageables, comme un four à induction ou un four à plasma, pourvu qu'ils permettent de faire fondre sensiblement complètement la charge de départ.

A l'étape c), un filet du liquide en fusion est dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière en fusion, connu de l'homme de l'art. Une bille d'une taille de 0,005 à 10 mm peut être ainsi produite.

Le refroidissement résultant de la dispersion conduit à la solidification des gouttelettes liquides. On obtient alors des billes solides selon l'invention.

Tout procédé conventionnel de fabrication de billes en un produit fondu peut être mis en oeuvre, pourvu que la composition de la charge de départ permette d'obtenir des billes présentant une composition conforme à celle des billes selon l'invention.

## Exemples

### Protocoles de mesure

Les méthodes suivantes permettent une excellente simulation du comportement réel en service dans les applications de broyage.

Pour déterminer **la résistance à l'usure dite « planétaire »**, une charge de billes à tester est tamisée entre 0,8 et 1 mm sur des tamis à mailles carrées. 20 ml (volume mesuré à l'aide d'une éprouvette graduée) desdites billes à tester sont pesées (masse $m_0$) et introduites dans un des 4 bols revêtus d'alumine frittée dense, de contenance de 125 ml d'un broyeur planétaire rapide du type PM400 de marque RETSCH. Sont ajoutés dans un des bols, 2,2 g de carbure de silicium de marque Presi (présentant une taille médiane D50 de 23 $\mu$m) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 $\mu$m de manière à enlever le carbure de silicium résiduel ainsi que les arrachements de matière dûs à l'usure lors du broyage. Après un tamisage sur un tamis à mailles carrées de 100 $\mu$m de côté, les billes sont ensuite séchées à l'étuve à 100 °C pendant 3h puis pesées (masse m).

L'usure planétaire (UP), exprimée en pourcentage, est donnée par la formule suivante :

$$100(m_0 - m) / m_0$$

Le résultat UP est donné dans le tableau 1.

On considère que les résultats sont particulièrement satisfaisants si les billes présentent une amélioration de la résistance à l'usure planétaire (UP) d'au moins 10 % par rapport à celle de l'exemple Référence 1.

Pour déterminer **l'usure dite « en milieu basique »**, c'est-à-dire dans des milieux présentant un pH supérieur à 8, une charge de billes à tester est tamisée entre 0,8 et 1 mm sur des tamis à mailles carrées. Un volume apparent de 1,04 litre de billes est pesé (masse m0). Les billes sont ensuite introduites dans un broyeur horizontal de type Netzsch LME1 (volume utile de 1,2 L) à disques excentrés en acier. Une suspension aqueuse de carbonate de calcium $CaCO_3$ présentant un pH égal à 8,2, contenant 70 % de matière sèche, dont 40 % des grains en volume sont inférieurs à 1 $\mu$m et dont la viscosité est ajustée à une valeur comprise entre 100 et 250 centipoise, passe en continu à travers le broyeur, avec un débit de 4 litres à l'heure. Le broyeur est démarré progressivement jusqu'à atteindre une vitesse linéaire en bout de disques de 10 m/s. Le broyeur est maintenu en fonctionnement pendant une durée t égale à 24 heures, puis arrêté. Les billes sont rincées à l'eau, sorties précautionneusement du broyeur puis lavées et séchées. Elles sont ensuite pesées (masse m). La vitesse d'usure V en grammes/heure est déterminée comme suit :

$$V = (m0 - m)/t$$

La charge de billes est reprise et complétée avec (m0-m) grammes de billes neuves de manière à renouveler l'opération de broyage autant de fois que nécessaire (n fois) pour que le temps cumulé de broyage soit au moins de 100 heures et que la différence entre la vitesse d'usure calculée à l'étape n et à l'étape n-1 soit inférieure à 15 % en relatif. Typiquement, la durée de broyage totale est comprise entre 100 heures et 140 heures. L'usure en milieu basique est la vitesse d'usure mesurée pour la dernière opération de broyage n.

Le pourcentage d'amélioration par rapport à l'exemple comparatif 1 est défini par la formule suivante : 100*(usure du produit de l'exemple comparatif 1 - usure du produit considéré)/ usure du produit de l'exemple comparatif 1. On considère que les résultats sont particulièrement satisfaisants si les produits présentent une amélioration de la résistance à l'usure d'au moins 10 % par rapport à celle de l'exemple comparatif 1.

La **porosité totale**, en %, est évaluée par la formule suivante :

$$\text{Porosité totale} = 100 \cdot (1 - (d_{billes}/d_{billes\ broyées})),$$

avec

- $d_{billes}$, la densité sur billes non broyées obtenues à l'aide d'un pycnomètre hélium (AccuPyc 1330 de la société Micromeritics®), selon une méthode basée sur la mesure du volume de gaz déplacé (dans le cas présent l'Hélium), et
- $d_{billes\ broyées}$ est la densité mesurée comme $d_{billes}$, mais sur une poudre provenant du broyage des billes réalisé avec un broyeur à sec de type annulaire de marque Aurec pendant 40s et suivi d'un tamisage pour ne conserver pour la mesure que la poudre passant à travers un tamis à mailles carrées de 160 $\mu$m de côté.

Protocole de fabrication

On introduit dans un four électrique à arc de type Héroult une charge de départ pulvérulente constituée de sable de zircon, d'alumine, de magnésie et de titane sous la forme de rutile, de manière à la faire fondre.
La matière en fusion est coulée sous la forme d'un filet, puis dispersée en billes par soufflage d'air comprimé.
On effectue plusieurs cycles fusion/coulée en ajustant les teneurs en titane, alumine, magnésie et zircon.
Cette technique permet de disposer de plusieurs lots de billes de compositions différentes que l'on peut ensuite caractériser.

Résultats

Les résultats obtenus sont résumés dans le tableau 1 suivant :

Tableau 1

| Ex | $ZrO_2 +$ $HfO_2$ (%) | $SiO_2$ (%) | $Al_2O_3$ (%) | MgO (%) | $TiO_2$ (%) | Autres oxydes (%) | $(ZrO_2 +$ $HfO_2)/ SiO_2$ | $Al_2O_3/$ $SiO_2$ | $MgO/SiO_2$ | $Al_2O_3 +$ $TiO_2$ (%) | Usure planétaire (UP) (%) | Usure en milieu basique (g/h) |
|---|---|---|---|---|---|---|---|---|---|---|---|---|
| 1 (*) | 67 | 31 | 1 | <0,05 | <0,05 | <1 | 2,16 | 0,03 | <0,01 | <1,05 | 6 | 3,7 |
| 2 | 40,2 | 20,3 | 15,1 | 16 | 6,9 | 1,5 | 1,98 | 0,74 | 0,79 | 22,0 | 2,0 | 1,5 |
| 3 | 36,1 | 18,1 | 14,7 | 15,6 | 14,3 | 1,2 | 1,99 | 0,81 | 0,86 | 29,0 | 2,6 | |
| 4 | 61,2 | 26,4 | 1,0 | 8,9 | 1,1 | 1,4 | 2,32 | 0,04 | 0,34 | 2,1 | 3,4 | 1,4 |
| 5 | 37,8 | 19,0 | 6,2 | 17,3 | 18,5 | 1,2 | 1,99 | 0,33 | 0,91 | 24,7 | 3,3 | |
| 6 (*) | 36,2 | 18,4 | 8,4 | 17,7 | 18,6 | 0,7 | 1,97 | 0,45 | 0,96 | 27,0 | 5,3 | |
| 7 (*) | 29,0 | 14,1 | 19,2 | 18,3 | 18,5 | 0,9 | 2,06 | 1,36 | 1,29 | 37,7 | 6,3 | 3,5 |
| (*) : exemple hors invention | | | | | | | | | | | | |

Les billes selon l'invention obtenues présentent une porosité totale inférieure ou égale à 2%.

On considère que les billes sont particulièrement performantes lorsqu'elles présentent à la fois une usure planétaire inférieure ou égale à 4%, de préférence inférieure à 3%, et une usure en milieu basique inférieure à 3 g/h, de préférence inférieure à 2,5 g/h, de préférence inférieure à 2 g/h, de préférence inférieure à 1,9 g/h, de préférence inférieure à 1,8 g/h, de préférence inférieure à 1,7 g/h, ces usures étant mesurées en suivant les protocoles ci-dessus.

Le tableau 1 montre que les exemples selon l'invention présentent une usure planétaire deux à trois fois plus faible que celle des exemples comparatifs.

L'exemple 1 illustre qu'en l'absence de $TiO_2$, ou avec des teneurs très faibles en $TiO_2$, l'usure en milieu basique est élevée, typiquement supérieure à 2 g/h.

L'exemple 2 selon l'invention, préféré entre tous et représenté en figure 1, présente au contraire une usure en milieu basique nettement inférieure à 2 g/h, ainsi qu'une usure planétaire égale à 2%, bien inférieure à 6%.

L'exemple 4 illustre qu'en présence de 1% de $TiO_2$ et 1% d'$Al_2O_3$, l'usure planétaire est égale à 3,4%, inférieure à 4%, et l'usure en milieu basique est égale à 1,4 g/h.

Une comparaison de l'exemple 5 selon l'invention et de l'exemple 6 hors invention illustre, pour des teneurs en MgO sensiblement constantes et supérieures à 17%, l'impact de la somme $TiO_2+Al_2O_3$ : l'exemple 5 présentant une telle somme égale à 24,7% présente une usure planétaire égale à 3,3%, contrairement à l'exemple 6 dont la somme $TiO_2+Al_2O_3$ est égale à 27% et pour lequel l'usure planétaire est élevée et égale à 5,3%. L'exemple 7 hors invention avec une teneur $TiO_2+Al_2O_3$ encore plus élevée et égale à 37,7% présente des usures planétaire et en milieu basique élevées, égales à 6,3% et 4 g/h, respectivement.

Bien entendu la présente invention n'est pas limitée aux modes de réalisation décrits, fournis à titre d'exemples illustratifs et non limitatifs.

## Revendications

1. Bille présentant une sphéricité supérieure ou égale à 0,6 et en un produit fondu présentant la composition chimique suivante, en pourcentages en masse sur la base des oxydes et pour un total de 100 % :

   $20\% \leq (ZrO_2 + HfO_2)$, avec $HfO_2 \leq 2\%$,
   $5\% \leq SiO_2$,
   $0\% \leq Al_2O_3 \leq 20\%$,
   $8,5\% \leq MgO \leq 20\%$,
   $0,5\% \leq TiO_2 \leq 20\%$, et
   oxydes autres que $ZrO_2$, $HfO_2$, $SiO_2$, $Al_2O_3$, MgO et $TiO_2$, ou « autres oxydes » : $\leq 5\%$

   pourvu que le rapport massique $(ZrO_2 + HfO_2)/SiO_2$ soit supérieur à 1, et
   pourvu que $Al_2O_3 + TiO_2 \leq 26\%$ si MgO > 17%.

2. Bille selon la revendication 1, dans laquelle MgO $\leq$ 17%.

3. Bille selon l'une quelconque des revendications précédentes, dans laquelle $ZrO_2 + HfO_2 + SiO_2 \geq 40\%$.

4. Bille selon l'une quelconque des revendications précédentes, dans laquelle le rapport en masse $MgO/SiO_2$ est supérieur à 0,1 et inférieur à 1.

5. Bille selon l'une quelconque des revendications précédentes, dans laquelle la teneur en $Al_2O_3$, en pourcentage en masse sur la base des oxydes, est supérieure ou égale à 0,5%.

6. Bille selon la revendication immédiatement précédente, dans laquelle la teneur en $Al_2O_3$, en pourcentage en masse sur la base des oxydes, est supérieure ou égale à 4% et inférieure ou égale à 18%.

7. Bille selon l'une quelconque des revendications précédentes, dans laquelle la teneur en $TiO_2$, en pourcentage en masse sur la base des oxydes, est supérieure ou égale à 1% et inférieure ou égale à 18%.

8. Bille selon la revendication précédente, dans laquelle la teneur en $TiO_2$, en pourcentage en masse sur la base des oxydes, est supérieure ou égale à 4% et inférieure ou égale à 13%.

9. Bille selon l'une quelconque des revendications 1 à 5, dans laquelle $ZrO_2 + HfO_2 + SiO_2 \geq 80\%$.

10. Bille selon l'une quelconque des revendications précédentes, dans laquelle la teneur en $ZrO_2$, en pourcentage en masse sur la base des oxydes, est supérieure ou égale à 30% et inférieure ou égale à 60%.

11. Bille selon l'une quelconque des revendications précédentes, dans laquelle la teneur en $SiO_2$, en pourcentage en masse sur la base des oxydes, est supérieure ou égale à 10%.

12. Bille selon l'une quelconque des revendications précédentes, dans laquelle la teneur en $SiO_2$, en pourcentage en masse sur la base des oxydes, est supérieure ou égale à 13% et inférieure ou égale à 30%.

13. Bille selon l'une quelconque des revendications précédentes, dans laquelle la teneur en MgO, en pourcentage en masse sur la base des oxydes, est supérieure ou égale à 9%.

14. Bille selon l'une quelconque des revendications précédentes, dans laquelle le rapport en masse $ZrO_2/SiO_2$ est supérieur ou égal à 1,3 et inférieur ou égal à 5.

15. Bille selon l'une quelconque des revendications précédentes, dans laquelle la teneur en autres oxydes est inférieure ou égale à 2%.

16. Bille selon l'une quelconque des revendications précédentes présentant une sphéricité supérieure à 0,8.

17. Poudre constituée pour plus de 90% de sa masse de billes selon l'une quelconque des revendications précédentes.

18. Utilisation d'une poudre selon la revendication précédente en tant qu'agent de broyage, agent de dispersion en milieu humide, agent de soutènement, agent d'échange thermique, ou pour le traitement de surfaces.

## Patentansprüche

1. Kugel mit einer Sphärizität größer oder gleich 0,6 und aus einem geschmolzenen Produkt mit der folgenden chemischen Zusammensetzung, in Gew.- %, bezogen auf die Oxide, und insgesamt 100 %:

   $20 \% \leq (ZrO_2 + HfO_2)$, mit $HfO_2 \leq 2 \%$,
   $5 \% \leq SiO_2$,
   $0 \% \leq Al_2O_3 \leq 20 \%$,
   $8,5 \% \leq MgO \leq 20 \%$,
   $0,5 \% \leq TiO_2 \leq 20 \%$ und
   andere Oxide als $ZrO_2$, $HfO_2$, $SiO_2$, $Al_2O_3$, MgO und $TiO_2$ oder "andere Oxide": $\leq 5 \%$,

   mit der Maßgabe, dass das Gewichtsverhältnis $(ZrO_2 + HfO_2)/SiO_2$ größer als 1 ist, und
   mit der Maßgabe, dass $Al_2O_3 + TiO_2 \leq 26 \%$, wenn MgO > 17 %.

2. Kugel nach Anspruch 1, in der MgO $\leq$ 17 %.

3. Kugel nach einem der vorangehenden Ansprüche, wobei $ZrO_2 + HfO_2 + SiO_2 \geq 40 \%$.

4. Kugel nach einem der vorangehenden Ansprüche, wobei das Gewichtsverhältnis $MgO/SiO_2$ größer als 0,1 und kleiner als 1 ist.

5. Kugel nach einem der vorangehenden Ansprüche, wobei der $Al_2O_3$-Gehalt, in Gew.-%, bezogen auf die Oxide, größer oder gleich 0,5 % ist.

6. Kugel nach dem unmittelbar vorangehenden Anspruch, wobei der Gehalt an $Al_2O_3$, in Gew.-%, bezogen auf die Oxide, größer oder gleich 4 % und kleiner oder gleich 18 % ist.

7. Kugel nach einem der vorangehenden Ansprüche, wobei der $TiO_2$-Gehalt, in Gew.-%, bezogen auf die Oxide, größer oder gleich 1 % und kleiner oder gleich 18 % ist.

8. Kugel nach einem vorangehenden Anspruch, wobei der $TiO_2$-Gehalt, in Gew.-%, bezogen auf die Oxide, größer oder gleich 4 % und kleiner oder gleich 13 % ist.

9. Kugel nach einem der Ansprüche 1 bis 5, wobei $ZrO_2 + HfO_2 + SiO_2 \geq 80$ %.

10. Kugel nach einem der vorangehenden Ansprüche, wobei der $ZrO_2$-Gehalt, in Gew.-%, bezogen auf die Oxide, größer oder gleich 30 % und kleiner oder gleich 60 % ist.

11. Kugel nach einem der vorangehenden Ansprüche, wobei der $SiO_2$-Gehalt, in Gew.-%, bezogen auf die Oxide, größer oder gleich 10 % ist.

12. Kugel nach einem der vorangehenden Ansprüche, wobei der $SiO_2$-Gehalt, in Gew.-%, bezogen auf die Oxide, größer oder gleich 13 % und kleiner oder gleich 30 % ist.

13. Kugel nach einem der vorangehenden Ansprüche, wobei der MgO-Gehalt, in Gew.-%, bezogen auf die Oxide, größer oder gleich 9 % ist.

14. Kugel nach einem der vorangehenden Ansprüche, wobei das Gewichtsverhältnis $ZrO_2/SiO_2$ größer oder gleich 1,3 und kleiner oder gleich 5 ist.

15. Kugel nach einem der vorangehenden Ansprüche, wobei der Gehalt an anderen Oxiden kleiner oder gleich 2 % ist.

16. Kugel nach einem der vorangehenden Ansprüche mit einer Sphärizität größer als 0,8.

17. Pulver, das aus mehr als 90 % seines Gewichts an Kugeln nach einem der vorangehenden Ansprüche besteht.

18. Verwendung eines Pulvers nach dem vorangehenden Anspruch als Mahlmittel, Nassdispersionsmittel, Stützmittel, Wärmetauschmittel oder zur Oberflächenbehandlung.

**Claims**

1. A bead having sphericity greater than or equal to 0.6 and made of a fused product having the following chemical composition, in percentages by weight based on the oxides and for a total of 100%:

   $20\% \leq (ZrO_2 + HfO_2)$, with $HfO_2 \leq 2\%$,
   $5\% \leq SiO_2$,
   $0\% \leq Al_2O_3 \leq 20\%$,
   $8.5\% \leq MgO \leq 20\%$,
   $0.5\% \leq TiO_2 \leq 20\%$, and
   oxides other than $ZrO_2$, $HfO_2$, $SiO_2$, $Al_2O_3$, MgO and $TiO_2$, or "other oxides": $\leq 5\%$

   provided that the weight ratio $(ZrO_2 + HfO_2)/SiO_2$ is greater than 1, and
   provided that $Al_2O_3 + TiO_2 \leq 26\%$ if $MgO > 17\%$.

2. The bead as claimed in claim 1, in which $MgO \leq 17\%$.

3. The bead as claimed in any one of the preceding claims, in which $ZrO_2 + HfO_2 + SiO_2 \geq 40\%$.

4. The bead as claimed in any one of the preceding claims, in which the weight ratio $MgO/SiO_2$ is greater than 0.1 and below 1.

5. The bead as claimed in any one of the preceding claims, in which the $Al_2O_3$ content, in percentage by weight based on the oxides, is greater than or equal to 0.5%.

6. The bead as claimed in the immediately preceding claim, in which the $Al_2O_3$ content, in percentage by weight based on the oxides, is greater than or equal to 4% and less than or equal to 18%.

7. The bead as claimed in any one of the preceding claims, in which the $TiO_2$ content, in percentage by weight based on the oxides, is greater than or equal to 1% and less than or equal to 18%.

8.  The bead as claimed in the preceding claim, in which the $TiO_2$ content, in percentage by weight based on the oxides, is greater than or equal to 4% and less than or equal to 13%.

9.  The bead as claimed in any one of claims 1 to 5, in which $ZrO_2 + HfO_2 + SiO_2 \geq 80\%$.

10. The bead as claimed in any one of the preceding claims, in which the $ZrO_2$ content, in percentage by weight based on the oxides, is greater than or equal to 30% and less than or equal to 60%.

11. The bead as claimed in any one of the preceding claims, in which the $SiO_2$ content, in percentage by weight based on the oxides, is greater than or equal to 10%.

12. The bead as claimed in any one of the preceding claims, in which the $SiO_2$ content, in percentage by weight based on the oxides, is greater than or equal to 13% and less than or equal to 30%.

13. The bead as claimed in any one of the preceding claims, in which the MgO content, in percentage by weight based on the oxides, is greater than or equal to 9%.

14. The bead as claimed in any one of the preceding claims, in which the weight ratio $ZrO_2/SiO_2$ is greater than or equal to 1.3 and less than or equal to 5.

15. The bead as claimed in any one of the preceding claims, in which the content of other oxides is less than or equal to 2%.

16. The bead as claimed in any one of the preceding claims, having a sphericity above 0.8.

17. A powder consisting of beads as claimed in any one of the preceding claims to more than 90% of its weight.

18. The use of the powder as claimed in the preceding claim as a grinding agent, agent for dispersion in a wet medium, propping agent, heat exchange agent, or for surface treatment.

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2320276

- EP 0662461 A